# EUROPÄISCHE PATENTSCHRIFT

(11) **EP 3 630 459 B1**
(45) Veröffentlichungstag und Bekanntmachung des Hinweises auf die Patenterteilung: **11.08.2021**
(21) Anmeldenummer: 18729333.7
(22) Anmeldetag: 16.05.2018
(51) Int. Cl.: B29C 65/02, B65B 51/30, B65B 57/00, B65B 65/02

(54) **VERFAHREN ZUR FUNKTIONSÜBERPRÜFUNG EINER SCHLAUCHBEUTELMASCHINE**
METHODS FOR A FUNCTIONAL CHECK OF A TUBULAR BAG MACHINE
PROCÉDÉS DE VÉRIFICATION DU FONCTIONNEMENT D'UNE ENSACHEUSE TUBULAIRE

(30) Priorität: 23.05.2017 DE 102017208766
(43) Veröffentlichungstag der Anmeldung: 08.04.2020
(73) Patentinhaber: Rovema GmbH, 35463 Fernwald (DE)
(72) Erfinder: GARTMANN, Timo, 35457 Lollar (DE)
(74) Vertreter: advotec.
(86) Internationale Anmeldenummer: PCT/EP2018/062682
(87) Internationale Veröffentlichungsnummer: WO 2018/215256

(56) Entgegenhaltungen:
- EP-A2- 0 368 016
- EP-A2- 0 865 989
- DE-A1-102007 004 140
- DE-A1-102013 203 295
- JP-A- 2006 193 176
- US-A- 5 653 085

## Beschreibung

Die Erfindung betrifft Verfahren zur Funktionsüberprüfung einer Schlauchbeutelmaschine nach dem Oberbegriff des Anspruchs 1.

Schlauchbeutelmaschinen sind gattungsgemäß mit einer Antriebssteuerung ausgestattet, die mehrere elektronische Antriebseinheiten unabhängig voneinander ansteuern kann. Dadurch wird es möglich, die verschiedenen Funktionselemente der Verpackungsmaschine, insbesondere die Siegeleinheiten, beim Abfahren von vordefinierten Bewegungsabläufen taktzeitsynchron anzutreiben. Das erfindungsgemäße Verfahren ist dabei auf die Funktionsüberprüfung der Quersiegeleinheit einer Schlauchbeutelmaschine gerichtet. Die Quersiegeleinheit gattungsgemäßer Schlauchbeutelmaschinen umfasst zumindest einen Antriebsmotor, beispielsweise einen Servomotor, einen Getriebe-Servomotor oder ein Torquemotor, mit dem zwei relativ zueinander antreibbare Quersiegelbacken angetrieben werden können. Mittels der Quersiegelbacken werden die Folienschläuche bei der Herstellung der Schlauchbeutel quer zur Förderrichtung verschweißt. Dazu werden die Quersiegelbacken unter Einschluss der Folienbahn des Schlauchbeutels zusammengefahren und durch Einbringung von Prozesswärme verschweißt. Derartige gattungsgemäße Vorrichtungen und Verfahren zur Steuerung der Bewegung von Quersiegeleinheiten einer Schlauchbeutelmaschine sind beispielsweise aus der EP 0 368 016 A2, der JP 2006 193176 A, der DE 10 2007 004140 A1, DE 10 2013 203295 A1 und der EP 0 865 989 A2 bekannt.

Aus der US 5 653 085 A ist eine Schlauchbeutelmaschine mit einer Antriebssteuerung für mehrere elektronische Antriebseinheiten und einer angetriebenen Quersiegeleinheit bekannt. Die beschriebene Quersiegeleinheit umfasst dabei zum Verschweißen eines Verpackungsfilms zwei zueinander antreibbare Quersiegelbacken, wobei die Stellung des Antriebsmotors mit einem Drehwinkeldetektor ermittelt werden kann.

Gattungsgemäß kann es auch vorgesehen sein, dass zum Antrieb der Quersiegelbacken ein Antriebsmotor vorgesehen ist, der mit einer Lagesensorik ausgestattet ist. Weiter ist ein Antriebsregler vorhanden, der dabei ganz allgemein dadurch charakterisiert werden soll, dass mit ihm mittelbar oder unmittelbar das vom Antriebsmotor aufgebrachte Antriebsmoment gemessen werden kann. Mit dem Antriebsregler kann beispielsweise die Stromaufnahme des Antriebsmotors gemessen und aus diesem Wert das Antriebsmoment des Antriebsmotors unter Verwendung der Motorkennwerte abgeleitet werden.

Die Stellungssensorik soll ganz allgemein dadurch charakterisiert sein, dass mit ihr mittelbar oder unmittelbar die Stellung des Antriebsmotors gemessen werden kann.

Für den eigentlichen Siegelprozess in der Schweißzone zwischen den beiden Quersiegelbacken ist die zwischen den Quersiegelbacken wirkende Siegelkraft ein hochrelevanter Prozessparameter für die Einhaltung der gewünschten Siegelqualität. Allerdings ist die unmittelbare Messung der Siegelkraft zwischen den beiden Quersiegelbacken nur mit aufwendigen Sensorsystemen möglich, weshalb stattdessen bei bekannten Schlauchbeutelmaschinen üblicherweise das Antriebsmoment des Antriebsmotors gemessen wird. Da das Antriebsmoment von den mechanischen Komponenten der Quersiegeleinheit auf die Quersiegelbacken übertragen wird, kann die zwischen den Quersiegelbacken wirkende Siegelkraft unter Verwendung einer Übertragungsfunktion, die im Wesentlichen die Federsteifigkeit der mechanischen Komponente der Quersiegeleinheit darstellt, aus dem jeweiligen Antriebsmoment des Antriebsmotors abgeleitet werden. Vielfach wird die jeweils zu verwendende Übertragungsfunktion zur Charakterisierung der mechanischen Eigenschaften der Quersiegeleinheit, mit der das Antriebsmoment des Antriebsmotors in die Siegelkraft der Siegelbacken übertragen wird, experimentell ermittelt. Unter Verwendung dieser einmal eingestellten Übertragungsfunktion wird dann der Betrieb der Schlauchbeutelmaschine vorgenommen, wobei jedoch Störungen und Abweichungen der Übertragungsfunktion nicht mehr feststellbar sind.

Wird beispielsweise das Siegelwerkzeug in den Quersiegelbacken ausgetauscht, so kann es aufgrund abweichender Montagebedingungen dazu kommen, dass sich die Übertragungsfunktion, mit der das Antriebsmoment in die Siegelkraft übersetzt wird, dadurch verändert, weil beispielsweise das neue Siegelwerkzeug eine andere Steifigkeit aufweist als das zuvor verwendete. Auch durch unterschiedliche Montagebedingungen oder den Einbau neuer Montagemittel, beispielsweise Unterlegscheiben, kann es zu Veränderungen in der Übertragungsfunktion kommen.

Bei den bekannten Schlauchbeutelmaschinen können diese Änderungen in der Charakteristik der Übertragungsfunktion zwischen Antriebsmotor und Quersiegelbacken nicht festgestellt werden, weshalb bei Störungen des Verpackungsprozesses eine Fehleranalyse vielfach nicht möglich ist.

Aufgabe der vorliegenden Erfindung ist es deshalb, ein Verfahren zur Funktionsüberprüfung einer Schlauchbeutelmaschine vorzuschlagen, mit der Änderungen der Übertragungsfunktion zwischen Antriebsmotor und Quersiegeleinheit feststellbar sind.

Diese Aufgabe wird durch die Lehre der beiden unabhängigen Hauptansprüche gelöst.

Das erfindungsgemäße Verfahren beruht zunächst einmal darauf, dass erst zu Beginn der Funktionsüberprüfung der Folienschlauch aus der Siegelzone zwischen den Quersiegelbacken entfernt wird.

Gemäß der ersten Variante des erfindungsgemäßen Verfahrens werden die Quersiegelbacken dann unter Vorgabe eines in der Antriebssteuerung abgespeicherten Soll-Drehmoments zusammengefahren. Nach Erreichen des Soll-Drehmoments wird anschließend die Ist-Stellung des Antriebsmotors gemessen. Diese Ist-Stellung des Antriebsmotors wird bei Erreichen des Soll-Drehmoments zuletzt mit einer in der Antriebssteuerung abgespeicherten Soll-Stellung, die dem vorgegebenen Soll-Drehmoment zugeordnet ist, verglichen. Weicht die gemessene Ist-Stellung bei Erreichen des Soll-Drehmoments von der erwarteten Soll-Stellung ab, so kann daraus geschlossen werden, dass die Übertragungsfunktion zwischen Antriebsmotor und Quersiegeleinheit eine unerwartete Änderung erfahren hat, so dass mit der bisher vorhandenen Übertragungsfunktion nicht weiterproduziert werden sollte.

Um die Diagnose der Änderung der Übertragungsfunktion zwischen Antriebsmotor und Quersiegeleinheit mit größerer Zuverlässigkeit abzusichern, ist es besonders vorteilhaft, wenn die Verfahrensschritte b), c) und d) nacheinander für unterschiedliche Soll-Drehmomente und den jeweils zugeordneten Soll-Stellungen wiederholt werden.

In welcher Weise die den Soll-Drehmomenten zugeordneten Soll-Stellungen ermittelt werden, ist grundsätzlich beliebig. Besonders einfach kann dies dadurch gelingen, dass zunächst die Quersiegeleinheit zusammen mit der gesamten Schlauchbeutelmaschine kalibriert und dadurch für bekannte Randbedingungen beim Betrieb der Schlauchbeutelmaschine gesorgt werden. In diesem kalibrierten Betrieb kann die Übertragungsfunktion zwischen Antriebsmotor und Quersiegeleinheit als bekannt angenommen werden. Anschließend wird dann die für verschiedene Soll-Drehmomente jeweils erreichte Ist-Stellung gemessen und diese gemessene Ist-Stellung anschließend in der Antriebssteuerung als Soll-Stellung für die späteren Funktionsüberprüfungen abgespeichert. Dabei ist also dann in der Antriebssteuerung für jedes Soll-Drehmoment eine zugeordnete Soll-Stellung abgespeichert.

Alternativ kann das erfindungsgemäße Verfahren auch dadurch durchgeführt werden, dass beim Zusammenfahren der Quersiegelbacken statt eines Soll-Drehmoments eine Soll-Stellung vorgegeben wird. Anschließend wird dann das nach Erreichen der Soll-Stellung aufgebrachte Ist-Drehmoment des Antriebsmotors gemessen und zuletzt dieses gemessene Ist-Drehmoment mit einem in der Antriebssteuerung abgespeicherten Soll-Drehmoment, das der vorgegebenen Soll-Stellung zugeordnet ist, verglichen.

Auch bei dieser Verfahrensvariante kann die Diagnosequalität verbessert werden, wenn in der Antriebssteuerung zu mehreren Soll-Stellungen jeweils mehrere Soll-Drehmomente abgespeichert sind und die Verfahrensschritte b), c) und d) nacheinander für die unterschiedlichen Soll-Stellungen und den jeweils zugeordneten Soll-Drehmomenten wiederholt werden.

Die Soll-Drehmomente, die den vorgegebenen Soll-Stellungen zugeordnet sind, können auch bei dieser Verfahrensvariante durch Aufnahme der Ist-Drehmomente bei Betrieb der kalibrierten Schlauchbeutelmaschine ohne Folienschlauch aufgenommen werden.

Für das mechanische Verhalten der Übertragung des Antriebsmoments des Antriebsmotors auf die Siegelkraft der Siegeleinheit ist insbesondere auch die jeweils vorhandene Prozesstemperatur von maßgeblicher Bedeutung. Denn die mechanische Festigkeit der Bauteile zwischen Antriebsmotor und Quersiegelbacken wird abhängig von der jeweiligen Temperatur entweder erhöht oder abgesenkt. Entsprechend verändert sich dadurch auch die Übertragungsfunktion zwischen Antriebsmotor und Quersiegelbacken. Um diese Fehlerquelle auszuschalten, ist es deshalb besonders vorteilhaft, wenn das erfindungsgemäße Verfahren mit den Verfahrensschritten a), b), c) und d) bei einer in der Antriebssteuerung abgespeicherten Referenztemperatur durchgeführt wird. Insbesondere ist es vorteilhaft, das erfindungsgemäße Verfahren mit den Verfahrensschritten a), b), c) und d) bei Raumtemperatur durchzuführen.

Die Referenztemperatur würde dabei bevorzugt der Temperatur entsprechen, bei der die Soll-Stellungen bzw. Soll-Drehmomente durch Messung von Ist-Stellungen bzw. Ist-Drehmomenten der kalibrierten Quersiegeleinheit ermittelt wurden.

Im Verfahrensschritt d) der beiden erfindungsgemäßen Verfahren werden die gemessenen Ist-Werte jeweils mit den erwarteten Soll-Werten für die Stellung bzw. das Drehmoment des Antriebsmotors verglichen. Um eine Auswertung dieses Vergleichsergebnisses zu erleichtern, ist es besonders vorteilhaft, wenn die im Verfahrensschritt d) ermittelte Differenz zwischen Soll-Stellung und Ist-Stellung bzw. zwischen Soll-Drehmoment und Ist-Drehmoment mit einer in der Antriebssteuerung abgespeicherten Toleranzschwelle verglichen wird. Erst bei Überschreiten der Toleranzschwelle wird dann eine Fehlermeldung ausgegeben. Dadurch wird verhindert, dass bereits sehr kleine Abweichungen zwischen Soll-Wert und Ist-Wert bereits zu einer Fehlermeldung führen.

In welcher Weise die Ist-Stellung des Antriebsmotors gemessen wird, ist grundsätzlich beliebig. Gemäß einer bevorzugten Ausführungsform ist es vorgesehen, dass die Ist-Stellung unmittelbar mit einem Drehwinkelsensor gemessen wird.

Weiter ist es auch im Prinzip beliebig, in welcher Weise das Ist-Drehmoment des Antriebsmotors gemessen wird. Besonders einfach kann dies durch mittelbare Messung des Antriebsreglers realisiert werden. Denn Antriebsmotoren gemäß dem Stand der Technik übertragen das vorgesehene Drehmoment mit hoher Genauigkeit .

Zu welchen Gelegenheiten die erfindungsgemäßen Verfahren zur Funktionsüberprüfung der Quersiegeleinheit einer Schlauchbeutelmaschine eingesetzt werden, ist grundsätzlich beliebig. Besonders vorteilhaft ist es, wenn die Verfahrensschritte a), b), c) und d) nach einem Wechsel der Quersiegelbacken durchgeführt werden. Dadurch kann nach dem Wechsel der Quersiegelbacken sichergestellt werden, dass die in der Schlauchbeutelmaschine voreingestellte Übertragungsfunktion zur Übertragung des Antriebsmoments des Antriebsmotors in die Siegelkraft der Quersiegelbacken auch tatsächlich mit den eingebauten Quersiegelbacken erreicht wird.

Auch nach Störungen des Betriebs der Schlauchbeutelmaschinen sollten die Verfahrensschritte a), b), c) und d) der beiden erfindungsgemäßen Verfahren bevorzugt durchgeführt werden, um die Quersiegeleinheit als mögliche Fehlerquelle zu identifizieren bzw. auszuschließen.

Die erfindungsgemäßen Verfahren können zur Funktionsüberprüfung sowohl von kontinuierlich arbeitenden Schlauchbeutelmaschinen als auch von intermittierend arbeitenden Schlauchbeutelmaschinen eingesetzt werden.

Eine Ausführungsform der Erfindung ist in den Zeichnungen schematisch dargestellt und wird nachfolgend beispielhaft erläutert.

Es zeigen:
**Fig. 1** die Quersiegeleinheit einer bekannten Schlauchbeutelmaschine in schematisierter seitlicher Ansicht;
**Fig. 2** ein Diagramm zur Ermittlung der den verschiedenen Soll-Drehmomenten zugeordneten Soll-Stellungen;
**Fig. 3** das Diagramm gemäß Fig. 2 nach Einführung von Toleranzschwellen;
**Fig. 4** das Diagramm gemäß Fig. 3 nach Ermittlung von Ist-Stellungen während einer ersten Funktionsüberprüfung;
**Fig. 5** das Diagramm gemäß Fig. 3 nach Ermittlung von Ist-Stellungen bei einer zweiten Funktionsüberprüfung.

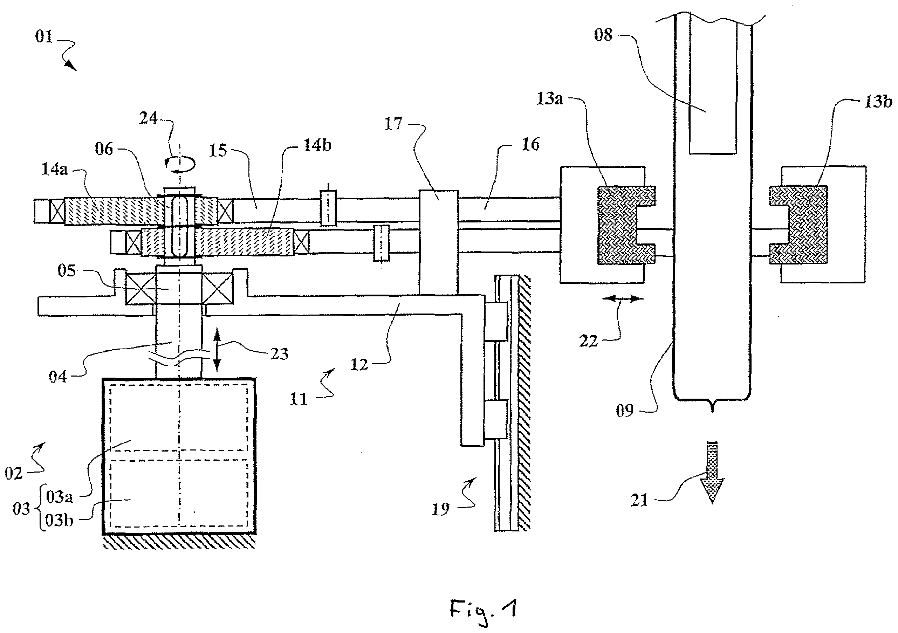

In **Fig. 1** ist die Quersiegeleinheit einer Schlauchbeutelmaschine mit zwei relativ zueinander beweglichen Quersiegelbacken 13a und 13b beispielhaft skizziert.

Zu erkennen ist in Fig. 1 ein endlos erzeugter Folienschlauch 09, in dem ein Verpackungsgut mittels eines Einfüllrohrs 08 eingefüllt werden kann. Der Folienschlauch 09 wird dabei in Förderrichtung 21 transportiert. Zur Erzeugung der einzelnen Schlauchbeutel wird der Folienschlauch 09 quergesiegelt. Dazu dienen die Quersiegelbacken13a und 13b. Diese Quersiegelbacken 13a und 13b können in Querrichtung 22 quer zur Förderrichtung 21 aufeinander zu- bzw. voneinander wegbewegt werden. In der Siegelstellung werden die Quersiegelbacken 13a und 13b gegeneinander gefahren, so dass der dazwischen liegende Folienschlauch 09 verpresst und durch Beheizen der Quersiegelbacken 13a und 13b verschweißt werden kann. Die Technik für das Quersiegeln von Schlauchbeuteln ist im Prinzip bekannt und bedarf keiner weiteren Erläuterung.

Die Quersiegelbacken 13a und 13b sind in dem in Fig. 1 dargestellten Ausführungsbeispiel jeweils an Haltestangen 16 angeordnet, die in einer Haltestangenlagerung 17 in Querrichtung linear verschiebbar gelagert sind. Eine gegenläufige Bewegung der Quersiegelbacken 13a und 13b wird mittels einer Exzenteranordnung realisiert. Hierzu wird auf der Antriebswelle 04 je Haltestange 16 ein Exzenterelement 14a und 14b drehfest angeschlagen. Am Exzenterelement 14a bzw. 14b ist wiederum ein Koppelelement 15 drehbar gelagert, welches schwenkbar mit der zugehörigen Haltestange 16 in Verbindung steht. Somit kann die rotierende Drehbewegung 24 der Antriebswelle 04 und zugleich die Exzenterelemente 14a und 14b in alternierender Bewegung der jeweiligen Haltestange 16 und somit der Quersiegelbacken 13a und 13b übertragen werden.

Die Anordnung der Exzenterelemente 14a und 14b auf der Antriebswelle 04 bildet zusammen mit Koppelelement 15 und der Haltestange 16 eine Übersetzungseinrichtung, welche die Drehbewegung 24 der Antriebswelle 04 in alternierende gegenläufige Bewegung der Quersiegelbacken 13a und 13b übersetzt. Die Übersetzungseinrichtung mit den Quersiegelbacken 13a und 13b ist Bestandteil der Quersiegeleinheit 11. Zum Antrieb der Antriebswelle 04 ist ein Antriebsmotor 02 mit einem Ständer 03a und einem Stator 03b vorgesehen. Der Antriebsmotor 02 ist dabei in der Art eines Antriebsmotors ausgebildet, bei dem die Ist-Stellung, nämlich der Drehwinkel ϕ, und das Ist-Drehmoment M mit einem entsprechenden Antriebsregler, der in Fig. 1 nicht dargestellt ist, gemessen werden kann.

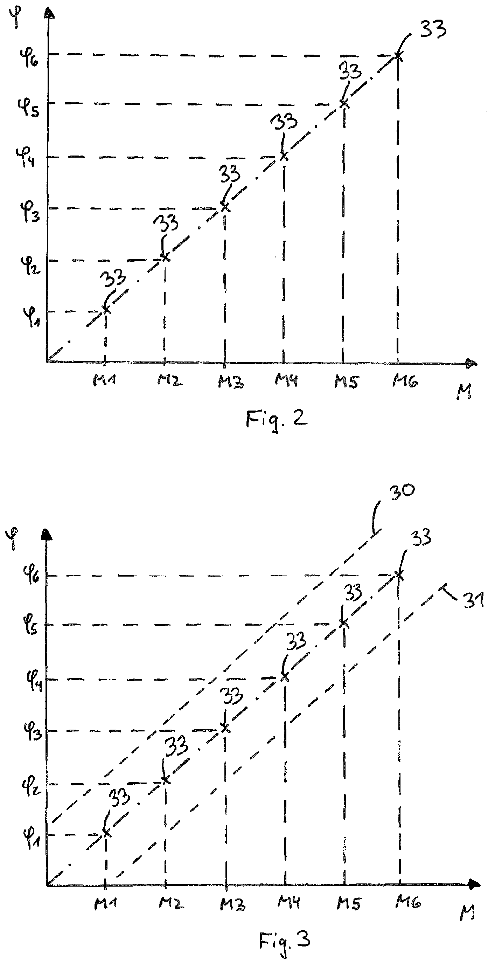

**Fig. 2** zeigt ein Diagramm zur Aufnahme von Soll-Stellungen, nämlich Soll-Drehwinkeln ϕ, die jeweils einen Soll-Drehmoment M zugeordnet werden. Zur Aufnahme der entsprechenden Werte der Soll-Drehwinkel ϕ1 bis ϕ6 wird zunächst die gesamte Schlauchbeutelmaschine mit der Quersiegeleinheit 01 kalibriert und der Folienschlauch 09 zwischen den Quersiegelbacken 13a und 13b entfernt. Anschließend wird der Quersiegeleinheit 01 von der Antriebssteuerung nacheinander die Soll-Drehmomente M1, M2, M3, M4, M5 und M6 vorgegeben. Sobald die jeweiligen Drehmomentwerte M1 bis M6 jeweils erreicht wurden, wird der von der Stellungssensorik ermittelte Ist-Drehwinkel ϕ ermittelt und der ermittelte Ist-Drehwinkel als Soll-Drehwinkel ϕ1 bis ϕ6 in der Antriebssteuerung abgespeichert. Im Ergebnis sind damit nach Ende des Ermittlungsprozesses zu jedem Soll-Drehmoment M1 bis M6 ein Soll-Drehwinkel ϕ1 bis ϕ6 abgespeichert, wobei die Soll-Drehmomente und Soll-Drehwinkel jeweils Wertepaare bilden. Wie in Fig. 2 skizzenhaft und beispielhaft dargestellt liegen die im Drehmoment-Drehwinkel-Diagramm angetragenen Wertepaaren jeweils alle auf einer Geraden. Die Steigung dieser Gerade repräsentiert gerade die Federsteifigkeit der Übersetzung zwischen dem Antriebsmotor 02 und den Quersiegelbacken 13a bzw. 13b.

**Fig. 3** zeigt das Diagramm gemäß Fig. 2 ergänzt durch zwei Toleranzschwellen 30 und 31. Die beiden Toleranzschwellen bilden dabei einen Korridor um die Gerade durch die Wertepaare der Soll-Drehmomente M1 bis M6 mit den Soll-Drehwinkeln ϕ1 bis ϕ6.

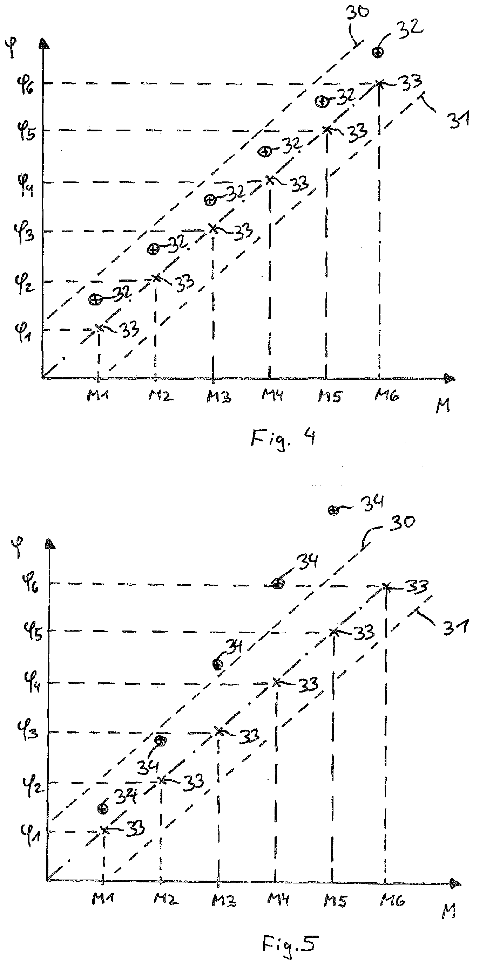

Das in **Fig. 4** dargestellte Diagramm zeigt das Diagramm gemäß Fig. 3 nach Durchführung einer ersten Funktionsüberprüfung. Bei dieser Funktionsüberprüfung wird wiederum der Folienschlauch 02 zwischen den Quersiegelbacken 13a und 13b entfernt und die Quersiegelbacken zusammengefahren. Anschließend wird nacheinander das Soll-Drehmoment M1 bis M6 vom Antriebsmotor 02 ausgebracht und jeweils der sich dabei ergebende Ist-Drehwinkel des Antriebsmotors 02 gemessen. Die entsprechenden Wertepaare 32 sind in Fig. 4 eingekreist markiert. Man erkennt, dass die sechs Wertepaare 32, die sich bei der Funktionsüberprüfung ergeben, alle auf einer Gerade liegen, die nach oben parallel verschoben ist zur Gerade durch die Wertepaare 33 aus Soll-Drehmoment und Soll-Drehwinkel (siehe Fig. 3). Diese Parallelverschiebung der Federlinie kann beispielsweise darauf beruhen, dass beim Einbau eines neuen Quersiegelwerkzeugs ein etwas anderer Abstand zwischen den Quersiegelbacken 13a und 13b realisiert wurde. Da die Wertepaare 32 jedoch alle innerhalb des Korridors zwischen den Toleranzschwellen 30 und 31 liegen, braucht eine Fehlermeldung nicht ausgegeben werden.

**Fig. 5** zeigt die Wertepaare 34 einer zweiten Funktionsüberprüfung, die die Ist-Stellung, nämlich den Ist-Drehwinkel zusammen mit dem jeweils aufgebrachten Soll-Drehmoment M1 bis M6 darstellt. Man erkennt, dass auch die Wertepaare 34 alle auf einer Gerade liegen, wobei diese Gerade eine andere Steigung als die Gerade durch die Wertepaare 33 aus Soll-Drehmoment und Soll-Drehwinkel ergibt. Diese andere Steigung der Federlinie durch die Wertepaare 34 kann beispielsweise durch den Einbau eines steiferen Bauteils, beispielsweise eines etwas steiferen Quersiegelwerkzeugs verursacht sein. Da die oberen drei Wertepaare 34 außerhalb des Korridors zwischen den Toleranzschwellen 30 und 31 liegen, wird in diesem Fall eine Fehlermeldung ausgegeben, so dass das Bedienpersonal eine Fehlerdiagnose durchführen kann.

## Patentansprüche

1. Verfahren zur Funktionsüberprüfung einer Schlauchbeutelmaschine, wobei die Schlauchbeutelmaschine eine Antriebsteuerung und mehrere elektronische Antriebseinheiten umfasst, die unabhängig voneinander von der Antriebsteuerung angesteuert werden und die verschiedene Funktionselemente der Verpackungsmaschine beim Abfahren von vordefinierten Bewegungsabläufen taktzeitsynchron antreiben, und wobei eine Antriebseinheit in der Art einer Quersiegeleinheit ausgebildet ist, und wobei die Quersiegeleinheit zumindest einen Antriebsmotors (02) und zwei vom Antriebsmotor (02) relativ zueinander antreibbaren Quersiegelbacken (13a, 13b) umfasst, mittels denen ein Folienschlauch (09) quer zur Förderrichtung (21) verschweißt werden kann, und wobei die Stellung (cp) des Antriebsmotors (02) mit einem Stellungssensor mittelbar oder unmittelbar gemessen werden kann,
**dadurch gekennzeichnet,**
**dass** das Antriebsmoment (M) des Antriebsmotors (02) mit einem Antriebsregler mittelbar oder unmittelbar gemessen werden kann, wobei das Verfahren folgende Verfahrensschritteaufweist:
a) Entfernen des Folienschlauchs (09) aus der Siegelzone zwischen den Quersiegelbacken (13a, 13b);
b) Zusammenfahren der Quersiegelbacken (13a, 13b) unter Vorgabe eines in der Antriebsteuerung gespeicherten Soll-Drehmoments;
c) Messen der Ist-Stellung des Antriebsmotors (02) nach Erreichen des Soll-Drehmoments;
d) Vergleich der gemessenen Ist-Stellung mit einer in der Antriebsteuerung abgespeicherten Soll-Stellung, die dem vorgegebenen Soll-Drehmoment zugeordnet ist.

2. Verfahren nach Anspruch 1,
**dadurch gekennzeichnet,**
**dass** in der Antriebsteuerung mehrere Soll-Drehmomente mit jeweils einer zugeordneten Soll-Stellung abgespeichert sind, wobei die Verfahrensschritte b), c) und d) nacheinander für die unterschiedlichen Soll-Drehmomente und den jeweils zugeordneten Soll-Stellungen wiederholt werden.

3. Verfahren nach Anspruch 1 oder 2,
**dadurch gekennzeichnet,**
**dass** zur Ermittlung der Soll-Stellungen die Quersiegeleinheit zunächst kalibriert und anschließend für verschiedene Soll-Drehmomente die erreichten Ist-Stellungen gemessen werden, wobei die so gemessenen Ist-Stellungen in der Antriebssteuerung als Soll-Stellungen, die den Soll-Drehmomenten jeweils zugeordnet sind, abgespeichert werden.

4. Verfahren zur Funktionsüberprüfung einer Schlauchbeutelmaschine, wobei die Schlauchbeutelmaschine eine Antriebsteuerung und mehrere elektronische Antriebseinheiten umfasst, die unabhängig voneinander von der Antriebsteuerung angesteuert werden und die verschiedene Funktionselemente der Verpackungsmaschine beim Abfahren von vordefinierten Bewegungsabläufen taktzeitsynchron antreiben, und wobei eine Antriebseinheit in der Art einer Quersiegeleinheit ausgebildet ist, und wobei die Quersiegeleinheit zumindest einen Antriebsmotors (02) und zwei vom Antriebsmotor (02) relativ zueinander antreibbaren Quersiegelbacken (13a, 13b) umfasst, mittels denen ein Folienschlauch (09) quer zur Förderrichtung (21) verschweißt werden kann, und wobei die Stellung (cp) des Antriebsmotors (02) mit einem Stellungssensor mittelbar oder unmittelbar gemessen werden kann,
**dadurch gekennzeichnet,**
**dass** das Antriebsmoment (M) des Antriebsmotors (02) mit einem Antriebsregler mittelbar oder unmittelbar gemessen werden kann, wobei das Verfahren folgende Verfahrensschritte aufweist:
a) Entfernen des Folienschlauchs (09) aus der Siegelzone zwischen den Quersiegelbacken (13a, 13b);
b) Zusammenfahren der Quersiegelbacken (13a, 13b) unter Vorgabe einer in der Antriebsteuerung gespeicherten Soll-Stellung;
c) Messen des Ist-Drehmoments des Antriebsmotors nach Erreichen des Soll-Stellung;
d) Vergleich des gemessenen Ist-Drehmoments mit einem in der Antriebsteuerung abgespeicherten Soll-Drehmoment, das der vorgegebenen Soll-Stellung zugeordnet ist.

5. Verfahren nach Anspruch 4,
**dadurch gekennzeichnet,**
**dass** in der Antriebsteuerung mehrere Soll-Stellungen mit jeweils einem zugeordneten Soll-Drehmoment abgespeichert sind, wobei die Verfahrensschritte b), c) und d) nacheinander für die unterschiedlichen Soll-Stellungen und den jeweils zugeordneten Soll-Drehmomenten wiederholt werden.

6. Verfahren nach Anspruch 4 oder 5,
**dadurch gekennzeichnet,**
**dass** zur Ermittlung der Soll-Drehmomente die Quersiegeleinheit zunächst kalibriert und anschließend für verschiedene Soll-Stellungen die erreichten Ist-Drehmomente gemessen werden, wobei die so gemessenen Ist-Drehmomente in der Antriebssteuerung als Soll-Drehmomente, die den Soll-Stellungen jeweils zugeordnet sind, abgespeichert werden.

7. Verfahren nach einem der Ansprüche 1 bis 6,
**dadurch gekennzeichnet,**
**dass** die Verfahrensschritte a), b), c) und d) bei einer in der Antriebssteuerung abgespeicherten Referenztemperatur, insbesondere bei Raumtemperatur, durchgeführt werden.

8. Verfahren nach Anspruch 7,
**dadurch gekennzeichnet,**
**dass** die Referenztemperatur der gemessenen Temperatur entspricht, bei der die Soll-Stellungen oder Soll-Drehmomenten durch Messung von Ist-Stellungen oder Ist-Drehmomenten der kalibrierten Quersiegeleinheit ermittelt wurden.

9. Verfahren nach einem der Ansprüche 1 bis 8,
**dadurch gekennzeichnet,**
**dass** eine im Verfahrensschritt d) ermittelte Differenz zwischen Soll-Stellung und Ist-Stellung oder zwischen Soll-Drehmoment und Ist-Drehmoment mit einem in der Antriebsteuerung abgespeicherten Toleranzschwelle (30, 31) verglichen wird, wobei beim Überschreiten der Toleranzschwelle (30, 31) eine Fehlermeldung ausgegeben wird.

10. Verfahren nach einem der Ansprüche 1 bis 9,
**dadurch gekennzeichnet,**
**dass** die Ist-Stellung unmittelbar mit einem Drehwinkelsensor gemessen wird.

11. Verfahren nach einem der Ansprüche 1 bis 10,
**dadurch gekennzeichnet,**
**dass** das Ist-Drehmoment mittelbar vom Antriebsregler des Antriebsmotors (02) gemessen wird.

12. Verfahren nach einem der Ansprüche 1 bis 11,
**dadurch gekennzeichnet,**
**dass** die Verfahrensschritte a), b), c) und d) nach einem Wechsel der Quersiegelbacken durchgeführt werden.

13. Verfahren nach einem der Ansprüche 1 bis 11,
**dadurch gekennzeichnet,**
**dass** die Verfahrensschritte a), b), c) und d) nach einer Störung des Betriebs der Schlauchbeutelmaschine durchgeführt werden.

14. Verfahren nach einem der Ansprüche 1 bis 13,
**dadurch gekennzeichnet,**
**dass** von den Antriebseinheiten ein Bewegungsablauf zur intermittierenden Herstellung von Schlauchbeuteln abgefahren wird.

15. Verfahren nach einem der Ansprüche 1 bis 13,
**dadurch gekennzeichnet,**
**dass** von den Antriebseinheiten ein Bewegungsablauf zur kontinuierlichen Herstellung von Schlauchbeuteln abgefahren wird.

## Claims

1. A method for testing the function of a tubular bag machine, the tubular bag machine comprising a drive control system and multiple electronic drive units which are controlled independently of each other by the drive control system and which drive different functional elements of the packing machine in a cycle time-synchronous manner as they are going through predefined motion sequences, and one drive unit being realized in the manner of a transverse sealing unit, and the transverse sealing unit comprising at least one drive motor (02) and two transverse sealing jaws (13a, 13b) which are driven relative to each other by the drive motor (02) and by means of which a film tube (09) is sealed transversely to the conveying direction (21), and the position (ϕ) of the drive motor (02) being measured directly or indirectly using a position sensor,
**characterized in that**
the drive torque (M) of the drive motor (02) is measured directly or indirectly using a drive controller,
the method comprising the following steps:
a) removing the film tube (09) from the sealing zone between the transverse sealing jaws (13a, 13b);
b) closing the transverse sealing jaws (13a, 13b) according to a predefined target torque stored in the drive control system;
c) measuring the actual position of the drive motor (02) once the target torque has been reached;
d) comparing the measured actual position to a target position stored in the drive control system and associated with the predefined target torque.

2. The method according to claim 1,
**characterized in that**
multiple target torques each having an associated target position are stored in the drive control system, method steps b), c) and d) being repeated one after the other for the different target torques and their associated target positions.

3. The method according to claim 1 or 2,
**characterized in that**
to determine the target positions, the transverse sealing unit is first calibrated, and then the actual positions reached are measured for different target torques, the actual positions thus measured being stored in the drive control system as target positions associated with the respective target torques.

4. A method for testing the function of a tubular bag machine, the tubular bag machine comprising a drive control system and multiple electronic drive units which are controlled independently of each other by the drive control system and which drive different functional elements of the packing machine in a cycle time-synchronous manner as they are going through predefined motion sequences, and one drive unit being realized in the manner of a transverse sealing unit, and the transverse sealing unit comprising at least one drive motor (02) and two transverse sealing jaws (13a, 13b) which are driven relative to each other by the drive motor (02) and by means of which a film tube (09) is sealed transversely to the conveying direction (21), and the position (ϕ) of the drive motor (02) being measured directly or indirectly using a position sensor,
**characterized in that**
the drive torque (M) of the drive motor (02) is measured directly or indirectly using a drive controller,
the method comprising the following steps:
a) removing the film tube (09) from the sealing zone between the transverse sealing jaws (13a, 13b);
b) closing the transverse sealing jaws (13a, 13b) according to a predefined target position stored in the drive control system;
c) measuring the actual torque of the drive motor once the target position has been reached;
d) comparing the measured actual torque to a target torque stored in the drive control system and associated with the predefined target position.

5. The method according to claim 4,
**characterized in that**
multiple target positions each having an associated target torque are stored in the drive control system, method steps b), c) and d) being repeated one after the other for the different target positions and their associated target torques.

6. The method according to claim 4 or 5,
**characterized in that**
to determine the target torques, the transverse sealing unit is first calibrated, and then the actual torques reached are measured for different target positions, the actual torques thus measured being stored in the drive control system as target torques associated with the respective target positions.

7. The method according to any one of claims 1 to 6,
**characterized in that**
methods steps a), b), c) and d) are carried out at a reference temperature stored in the drive control system, in particular at room temperature.

8. The method according to claim 7,
**characterized in that**
the reference temperature corresponds to the measured temperature at which the target positions or the target torques were determined by measuring actual positions or actual torques of the calibrated transverse sealing unit.

9. The method according to any one of claims 1 to 8,
**characterized in that**
a difference determined in method step d) between the target position and the actual position or between the target torque and the actual torque is compared to a tolerance threshold (30, 31) stored in the drive control system, an error being reported if the tolerance threshold (30, 31) is exceeded.

10. The method according to any one of claims 1 to 9,
**characterized in that**
the actual position is measured directly using a rotation angle sensor.

11. The method according to any one of claims 1 to 10,
**characterized in that**
the actual torque is measured indirectly by the drive controller of the drive motor (02).

12. The method according to any one of claims 1 to 11,
**characterized in that**
method steps a), b), c) and d) are carried out after the transverse sealing jaws have been replaced.

13. The method according to any one of claims 1 to 11,
**characterized in that**
method steps a), b), c) and d) are carried out after a disruption of the operation of the tubular bag machine.

14. The method according to any one of claims 1 to 13,
**characterized in that**
the drive units go through a motion sequence for the intermittent production of tubular bags.

15. The method according to any one of claims 1 to 13,
**characterized in that**
the drive units go through a motion sequence for the continuous production of tubular bags.

## Revendications

1. Procédé pour contrôler la fonction d'une machine de sachet tubulaire, la machine de sachet tubulaire comprenant un système de commande d'entraînement et plusieurs unités d'entraînement électroniques qui sont commandées indépendamment les unes des autres par le système de commande d'entraînement et qui entrainent des éléments fonctionnels différents de la machine d'emballage de manière synchrone au niveau du temps de cycle lorsque des séquences de mouvement prédéfinies sont exécutées, et une unité d'entraînement étant réalisée à la manière d'une unité de scellage transversal, et l'unité de scellage transversal comprenant au moins un moteur d'entraînement (02) et deux mâchoires de scellage (13a, 13b) transversal qui sont entraînées l'une par rapport à l'autre par le moteur d'entraînement (02) et au moyen desquelles un tube de film (09) est soudé transversalement à la direction du convoyage (21), et la position (cp) du moteur d'entraînement (02) étant mesurée indirectement ou directement au moyen d'un capteur de position,
**caractérisé en ce que**
le couple d'entraînement (M) du moteur d'entraînement (02) est mesuré indirectement ou directement au moyen d'un régulateur d'entraînement, le procédé comprenant les étapes du procédé consistant à :
a) retirer le tube de film (09) de la zone de scellage entre les deux mâchoires de scellage (13a, 13b) transversal ;
b) fermer les mâchoires de scellage (13a, 13b) transversal conformément à un couple de consigne prédéfini et mémorisé dans le système de commande d'entraînement ;
c) mesurer la position réelle du moteur d'entraînement (02) après avoir atteint le couple de consigne ;
d) comparer la position réelle mesurée avec une position de consigne mémorisée dans le système de commande d'entraînement et attribuée au couple de consigne prédéfini.

2. Procédé selon la revendication 1,
**caractérisé en ce que**
plusieurs couples de consigne, dont chacun a une position de consigne attribuée, sont mémorisés dans le système de commande d'entraînement, les étapes du procédé b), c) et d) étant répétées l'une après l'autre pour les couples de consigne différents et leurs positions de consigne attribuées.

3. Procédé selon la revendication 1 ou 2,
**caractérisé en ce que**
pour déterminer les positions de consigne, l'unité de scellage transversal est d'abord calibrée et, ensuite, les positions réelles atteintes sont mesurées pour des couples de consigne différents, les positions réelles mesurées de cette manière étant mémorisées dans le système de commande d'entraînement comme positions de consigne attribuées aux couples de consigne respectifs.

4. Procédé pour contrôler la fonction d'une machine de sachet tubulaire, la machine de sachet tubulaire comprenant un système de commande d'entraînement et plusieurs unités d'entraînement électroniques qui sont commandées indépendamment les unes des autres par le système de commande d'entraînement et qui entrainent des éléments fonctionnels différents de la machine d'emballage de manière synchrone au niveau du temps de cycle lorsque des séquences de mouvement prédéfinies sont exécutées, et une unité d'entraînement étant réalisée à la manière d'une unité de scellage transversal, et l'unité de scellage transversal comprenant au moins un moteur d'entraînement (02) et deux mâchoires de scellage (13a, 13b) transversal qui sont entraînées l'une par rapport à l'autre par le moteur d'entraînement (02) et au moyen desquelles un tube de film (09) est soudé transversalement à la direction du convoyage (21), et la position (cp) du moteur d'entraînement (02) étant mesurée indirectement ou directement au moyen d'un capteur de position,
**caractérisé en ce que**
le couple d'entraînement (M) du moteur d'entraînement (02) est mesuré indirectement ou directement au moyen d'un régulateur d'entraînement, le procédé comprenant les étapes du procédé consistant à :
a) retirer le tube de film (09) de la zone de scellage entre les deux mâchoires de scellage (13a, 13b) transversal ;
b) fermer les mâchoires de scellage (13a, 13b) transversal conformément à une position de consigne prédéfinie et mémorisée dans le système de commande d'entraînement ;
c) mesurer le couple réel du moteur d'entraînement après avoir atteint la position de consigne ;
d) comparer le couple réel mesuré avec un couple de consigne mémorisé dans le système de commande d'entraînement et attribué à la position de consigne prédéfinie.

5. Procédé selon la revendication 4,
**caractérisé en ce que**
plusieurs positions de consigne, dont chacune a un couple de consigne attribué, sont mémorisées dans le système de commande d'entraînement, les étapes du procédé b), c) et d) étant répétées l'une après l'autre pour les positions de consigne différentes et leurs couples de consigne attribués.

6. Procédé selon la revendication 4 ou 5,
**caractérisé en ce que**
pour déterminer les couples de consigne, l'unité de scellage transversal est d'abord calibrée et, ensuite, les couples réelles atteints sont mesurés pour des positions de consigne différentes, les couples réels mesurés de cette manière étant mémorisés dans le système de commande d'entraînement comme couples de consigne attribués aux positions de consigne respectives.

7. Procédé selon l'une quelconque des revendications 1 à 6,
**caractérisé en ce que**
les étapes de procédé a), b), c) et d) sont effectuées à une température de référence mémorisée dans le système de commande d'entraînement, notamment à température ambiante.

8. Procédé selon la revendication 7,
**caractérisé en ce que**
la température de référence correspond à la température mesurée à laquelle les positions de consigne ou les couples de consigne ont été déterminés en mesurant des positions réelles ou des couples réels de l'unité de scellage transversal calibrée.

9. Procédé selon l'une quelconque des revendications 1 à 8,
**caractérisé en ce**
**qu'**une différence déterminée dans l'étape de procédé d) entre la position de consigne et la position réelle ou entre le couple de consigne et le couple réel est comparée avec un seuil de tolérance (30, 31) mémorisé dans le système de commande d'entraînement, un défaut étant signalé lorsque le seuil de tolérance (30, 31) est excédé.

10. Procédé selon l'une quelconque des revendications 1 à 9,
**caractérisé en ce que**
la position réelle est mesurée directement au moyen d'un capteur d'angle de rotation.

11. Procédé selon l'une quelconque des revendications 1 à 10,
**caractérisé en ce que**
le couple réel est mesuré indirectement par le régulateur d'entraînement du moteur d'entraînement (02).

12. Procédé selon l'une quelconque des revendications 1 à 11,
**caractérisé en ce que**
les étapes de procédé a), b), c) et d) sont effectuées après un remplacement des mâchoires de scellage transversal.

13. Procédé selon l'une quelconque des revendications 1 à 11,
**caractérisé en ce que**
les étapes de procédé a),b), c) et d) sont effectuées après un dérangement du fonctionnement de la machine de sachet tubulaire.

14. Procédé selon l'une quelconque des revendications 1 à 13,
**caractérisé en ce**
**qu'**une séquence de mouvement est exécutée par les unités d'entraînement pour la production intermittente de sachets tubulaires.

15. Procédé selon l'une quelconque des revendications 1 à 13,
**caractérisé en ce**
**qu'**une séquence de mouvement est exécutée par les unités d'entraînement pour la production continue de sachets tubulaires.
